# EUROPÄISCHE PATENTSCHRIFT

(11) **EP 3 092 155 B1**
(45) Veröffentlichungstag und Bekanntmachung des Hinweises auf die Patenterteilung: **17.10.2018**
(21) Anmeldenummer: 15705177.2
(22) Anmeldetag: 09.01.2015
(51) Int. Cl.: B60R 11/02, F16M 11/04

(54) **TRÄGEREINRICHTUNG**
SUPPORTING DEVICE
DISPOSITIF SUPPORT

(30) Priorität: 10.01.2014 DE 102014100224
(43) Veröffentlichungstag der Anmeldung: 16.11.2016
(73) Patentinhaber: Rubbertec GmbH, 72622 Nürtingen (DE)
(72) Erfinder: ZWISLER, Christian, 72649 Wolfschlugen (DE); THOMAS, Moritz, 81245 München (DE)
(74) Vertreter: advotec.
(86) Internationale Anmeldenummer: PCT/DE2015/100015
(87) Internationale Veröffentlichungsnummer: WO 2015/104020

(56) Entgegenhaltungen:
- DE-U1-202009 001 108
- DE-U1-202011 100 673
- US-A- 5 529 271
- US-A1- 2005 127 253
- US-A1- 2011 006 091

## Beschreibung

Die Erfindung betrifft eine Trägereinrichtung zur Anordnung in einem land-, wasser- oder luftgebundenen Fahrzeug.
Derartige Trägereinrichtungen können bei bekannten Personenkraftwagen als Klapptisch ausgebildet sein, welcher an der Rückseite einer Rückenlehne eines Fahrzeugsitzes angeordnet ist und zwischen einer an der Rückenlehne anliegenden Staustellung und einer waagerechten Nutzstellung verschwenkbar ist. Der Klapptisch hat eine Tischplatte, die über Scharniere mit Trägerelementen verbunden ist, die an der Rückenlehne befestigt sind. Ein Klapptisch kann jedoch lediglich zur Ablage von Gegenständen genutzt werden.
Aus der Druckschrift DE 20 2011 100 673 U1 sind verschiedene Varianten von Vorrichtungen zum Anbringen eines Tablet-Computers auf der Rückseite eines Fahrersitzteils bekannt. Diese weisen jeweils ein Spannelement, welches einer Fixierung der Vorrichtung an einem Fahrersitzteil dient, ein Trägerelement sowie einen Halter für ein Funktionselement auf, wobei das Trägerelement untrennbar mit dem Halter verbunden ist.

US 2005/0127253 A1 offenbart eine Trägereinrichtung umfassend einen Basisträger und eine Halteeinrichtung für ein Funktionselement, wobei mindestens zwei Haltearme vorgesehen sind, die jeweils an einem Gleiter schwenkbar gelagert sind, der in einer Führungsbahn des Basisträgers geführt ist.

Der Erfindung liegt die Aufgabe zugrunde, eine Trägereinrichtung zur Anord einem land-, wasser- oder luftgebundenen Fahrzeug zu schaffen, die variabel an unterschiedliche Einsatzzwecke anpassbar ist.
Diese Aufgabe ist erfindungsgemäß durch die Trägereinrichtung mit den Merkmalen des Patentanspruchs 1 gelöst.
Es wird also eine Trägereinrichtung zur Anordnung in einem land-, wasser- oder luftgebundenen Fahrzeug vorgeschlagen, die einen Basisträger zur Fixierung an einem Fahrzeugteil, eine Multifunktionsaufnahme, eine Halteeinrichtung für ein Funktionselement, die werkzeugfrei lösbar in der Multifunktionsaufnahme fixierbar ist, sowie mindestens zwei Haltearme und ein Kopplungselement umfasst. Die mindestens zwei Haltearme sind jeweils an einem Gleiter schwenkbar gelagert und an ihren dem Basisträger abgewandten Enden über ein Kugellager mit der Multifunktionsaufnahme verbunden.

Über die Multifunktionsaufnahme und die mit dieser verbindbaren Halteeinrichtung können Funktionselemente an den mindestens zwei Haltearmen befestigt werden. Ein solches Funktionselement ist beispielsweise eine Datenverarbeitungseinrichtung, wie ein Tablet-Computer, ein Mobiltelefon oder ein Notebook, eine Tischplatte oder dergleichen. Die Halteeinrichtung kann integraler Bestandteil des Funktionselements oder auch ein separates Bauteil sein, an das das Funktionselement angebunden werden kann.

Die Gleiter der Trägereinrichtung sind jeweils in einer Führungsbahn des Basisträgers geführt. Das Kopplungselement umfasst eine Koppelscheibe, die in eine Aufnahmetasche der Multifunktionsaufnahme eingreift. Die Fixierung der Koppelscheibe in der Aufnahmetasche erfolgt vorzugsweise über einen Rast- oder Schnappmechanismus. Die Aufnahmetasche kann bei einer speziellen Ausführungsform der Trägereinrichtung nach der Erfindung von einer Grundplatte und einem auf der Grundplatte angeordneten Ringabschnitt gebildet sein, der zum Einführen oder Ausführen der Koppelscheibe der Halteeinrichtung eine Aussparung aufweist und mit einem der Grundplatte gegenüberliegenden, radial nach innen weisenden unterbrochenen Ringbund versehen ist. Die Multifunktionsaufnahme umgreift dann also die Koppelscheibe der Halteeinrichtung für das Funktionselement.

Um die Trägereinrichtung nach der Erfindung flexibel an den jeweiligen Nutzungszweck anpassen zu können, ist es vorteilhaft, wenn die Multifunktionsaufnahme gegenüber dem Basisträger in drei Raumrichtungen verschwenkbar ist.

Um die Einstellmöglichkeiten der Trägereinrichtung nach der Erfindung weiter zu erhöhen, kann der Basisträger Führungsbahnen für die Gleiterer aufweisen, an denen die mindestens zwei Haltearme angelenkt sind.

Bei einer speziellen Ausführungsform der Trägereinrichtung nach der Erfindung sind vorzugsweise drei Haltearme vorgesehen.

Die Gleiter können beispielsweise jeweils an einer Druckplatte anliegen, die den jeweiligen Gleiter in der Führungsbahn in Position hält.

Die Führungsbahnen können bezogen auf einen Zentralabschnitt des Basisträgers in radialer Richtung verlaufen.

Um die Variabilität und Flexibilität der Trägereinrichtung nach der Erfindung noch weiter zu erhöhen, können die mindestens zwei Haltearme teleskopierbar sein.

Zur Fixierung eines plattenartigen Funktionselements, wie eines Tablet-Computers, eines Mobiltelefons, eines gegebenenfalls elektronischen Buches oder einer Tischplatte, kann die Halteeinrichtung eine Trägerspinne umfassen. Die Trägerspinne, die mittig mit dem Kopplungselement zum Fixieren in der Multifunktionsaufnahme versehen sein kann, umfasst beispielsweise mindestens drei Arme, die vorzugsweise jeweils ein Greifelement zum Übergreifen eines Randes und/oder einer Ecke des Funktionselements haben. Das Greifelement ist beispielsweise eine U-förmige Lasche oder ein Taschenelement mit dreieckigem Grundriss, in das eine Ecke des Funktionselements eintauchen kann.

Zur Anpassung an unterschiedlich große Funktionselemente kann mindestens einer der Arme der Trägerspinne der Halteeinrichtung teleskopierbar ausgebildet sein.

Bei einer alternativen Ausführungsform der Trägereinrichtung nach der Erfindung ist die Halteeinrichtung tisch- oder tabletartig ausgebildet. In diesem Falle kann die Halteeinrichtung eine Mulde umfassen, die einen Tablet-Computer oder ein Mobiltelefon aufweist.

Des Weiteren ist es vorteilhaft, wenn die Halteeinrichtung eine Leuchte umfasst. Damit kann die Trägereinrichtung nach der Erfindung auch bei schlechtem Umgebungslicht als Arbeitsplatz genutzt werden.

Zur Anbindung eines elektronischen Funktionselements an eine Fahrzeugelektronik ist es vorteilhaft, wenn die Halteeinrichtung eine elektrische Schnittstelle umfasst. Entsprechend kann die Multifunktionsaufnahme mit einer elektrischen Schnittstelle versehen sein, die mit der Fahrzeugelektronik verbunden ist.

Die Erfindung hat auch ein land-, wasser- oder luftgestütztes Fahrzeug zum Gegenstand, das eine Trägereinrichtung der vorstehend beschriebenen Art umfasst. Insbesondere ist das Fahrzeug ein Personenkraftwagen, bei dem die Trägereinrichtung an einem Fahrzeugsitz, an einer Mittelkonsole, an einer Seitentür oder dergleichen angeordnet ist. Denkbar ist es aber auch, dass die Trägereinrichtung in einem Flugzeug, einem Schiff oder einem schienengebundenen Fahrzeug zum Einsatz kommt und dort in einen Sitz oder einen Wandabschnitt integriert ist.

Weitere Vorteile und vorteilhafte Ausgestaltungen des Gegentandes der Erfindung sind der Beschreibung, der Zeichnung und den Patentansprüchen entnehmbar.

Ein Ausführungsbeispiel einer Trägereinrichtung nach der Erfindung ist in der Zeichnung schematisch vereinfacht dargestellt und wird in der nachfolgenden Beschreibung näher erläutert. Es zeigt:
- Figur 1: ein Fahrzeug und eine Seitenansicht einer Rückenlehne eines Fahrzeugsitzes mit einer Trägereinrichtung nach der Erfindung;
- Figur 2: eine perspektivische Ansicht der Trägereinrichtung in Alleinstellung;
- Figur 3: eine perspektivische Draufsicht auf einen Basisträger mit Haltearmen in deren Staustellung;
- Figur 4: eine Figur 3 entsprechende Ansicht, jedoch in Nutzstellung der Haltearme;
- Figur 5: eine ausschnittsweise Schnittdarstellung des Basisträgers zusammen mit Haltearmen und einer Multifunktionsaufnahme;
- Figur 6: ebenfalls eine ausschnittsweise Schnittdarstellung des Basisträgers, die eine Anbindung der Haltearme zeigt; und
- Figur 7: eine perspektivische Darstellung der Anbindung der Haltearme an die Multifunktionsaufnahme.

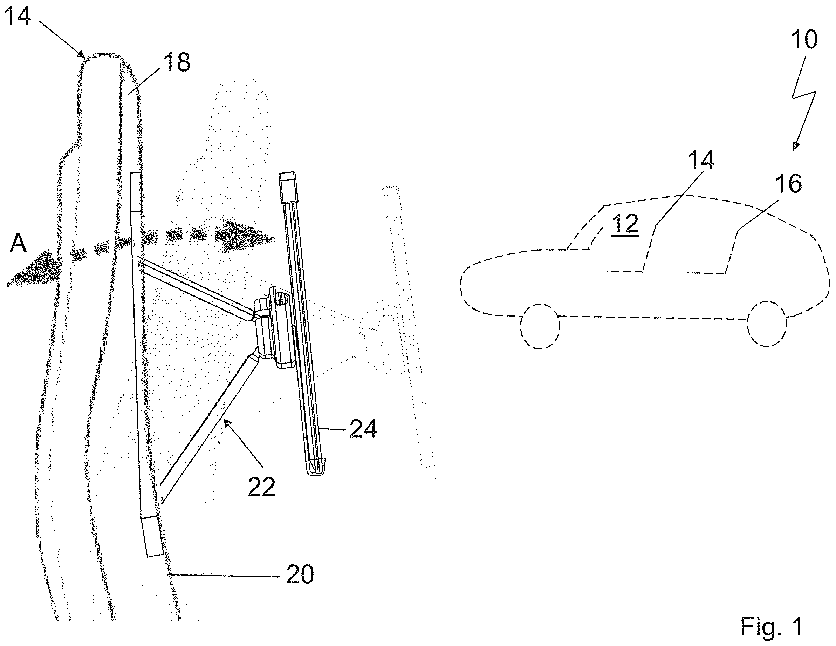

In Figur 1 ist ein Kraftfahrzeug 10 dargestellt, das einen Fahrzeuginnenraum 12 aufweist, in dem Vordersitze 14 und eine Rückbank 16 angeordnet sind.

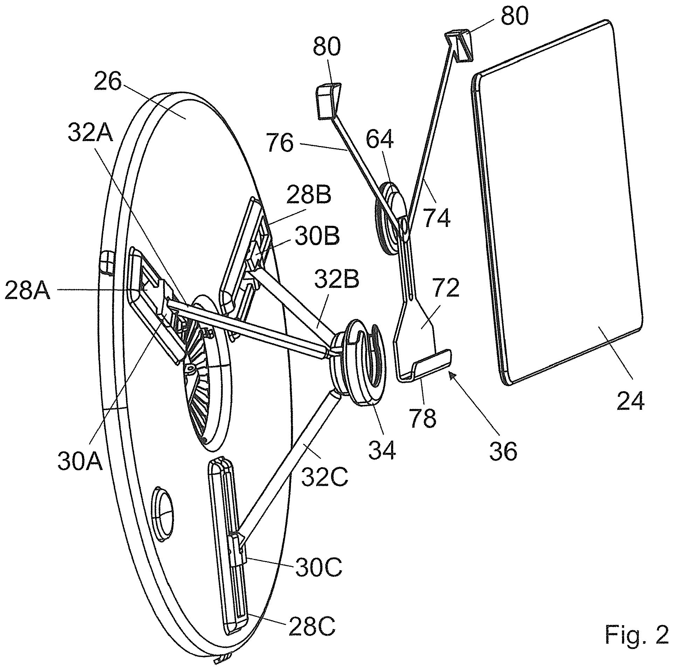

Die Vordersitze 14 haben jeweils eine Rückenlehne 18, die gemäß einem Doppelpfeil A hinsichtlich ihrer Neigung einstellbar ist. An einer Rückseite 20 der Rückenlehne 18 ist eine erfindungsgemäß ausgebildete Trägereinrichtung 22 angeordnet, die in den Figuren 2 bis 7 detailliert dargestellt ist und zur Fixierung eines ein Funktionselement darstellenden plattenartigen Accessoires 24 dient, das ein Tablet-Computer, ein Mobiltelefon, eine Tischplatte, ein gegebenenfalls elektronisches Buch oder dergleichen sein kann.

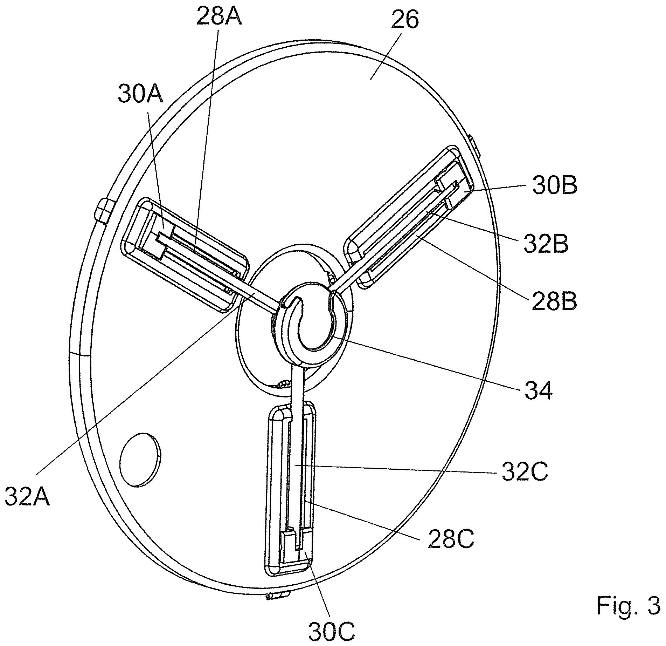

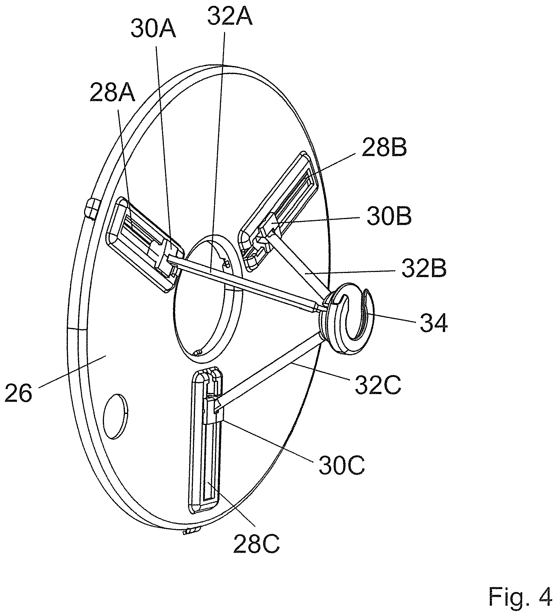

Die Trägereinrichtung 22, die zwischen einer in Figur 3 dargestellten Staustellung und einer in Figur 4 dargestellten Nutzstellung verstellbar ist, umfasst einen plattenartigen Basisträger 26 mit zumindest angenähert kreisrundem Grundriss. An dem Basisträger 26, der fest mit der Rückenlehne 18 verbunden ist, sind drei Führungsbahnen 28A, 28B und 28C für jeweils einen Gleiter 30A, 30B bzw. 30C ausgebildet, die sich bezogen auf einen Mittelpunkt des Basisträgers 26 in radialer Richtung erstrecken. An die Gleiter 30A, 30B und 30C ist jeweils ein Haltearm 32A, 32B bzw. 32C angelenkt. Die Haltearme 32A, 32B und 32C, die jeweils einen Aussteller darstellen, sind wiederum an ihren dem Basisträger 26 abgewandten Enden an eine Multifunktionsaufnahme 34 angelenkt, die zur werkzeuglos lösbaren Fixierung einer Halteeinrichtung 36 für das Accessoire 24 dient.

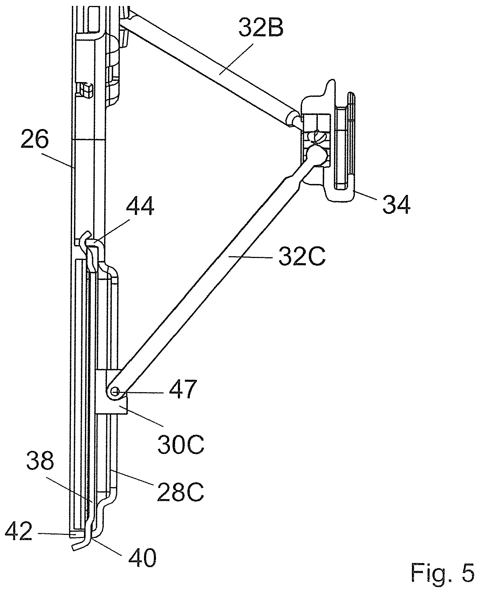

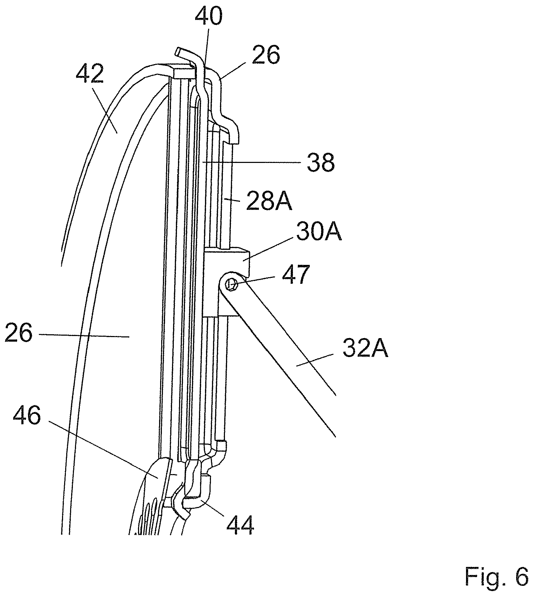

Wie insbesondere den Figuren 5 und 6 zu entnehmen ist, weist der Basisträger 26 für die Gleiter 30A, 30B und 30C jeweils einen Schlitz auf, der als Führungsbahn 28A, 28B bzw. 28C für den jeweiligen Gleiter dient. Um die Gleiter 30A, 30B und 30C in den Führungsbahnen 28A, 28B und 28C zu halten und die Gleiter in einer jeweiligen Stellung in den Führungsbahnen 28A, 28B und 28C zu halten, sind an einer Rückseite des Basisträgers 26 streifenartige Druckplatten 38 angeordnet, die jeweils mit einen Ende in einer Aussparung 40 an einem äußeren Ringbund 42 des Basisträgers 26 und mit ihren anderen Enden an einem inneren Ringbund 44 gelagert sind und an dem inneren Ringbund 44 mittels einer gegebenenfalls einen Federmechanismus aufweisenden Riegelplatte 46 gesichert sind. Die Druckplatten 38 üben von der Rückseite des Basisträgers 26 aus eine Haltekraft auf die Gleiter 30A, 30B und 30C auf, so dass diese nicht in ungewollter Weise in ihren Führungsbahnen 28A, 28B und 28C verfahren. Die Druckplatten 38 sind also Bremseinrichtungen für die Gleiter 30A, 30B und 30C. Wie ebenfalls den Figuren 5 und 6 zu entnehmen ist, sind die Haltearme 32A, 32B und 32C bzw. Aussteller über Lagerzapfen 47 an den Gleitern 30A, 30B und 30C schwenkbar gelagert.

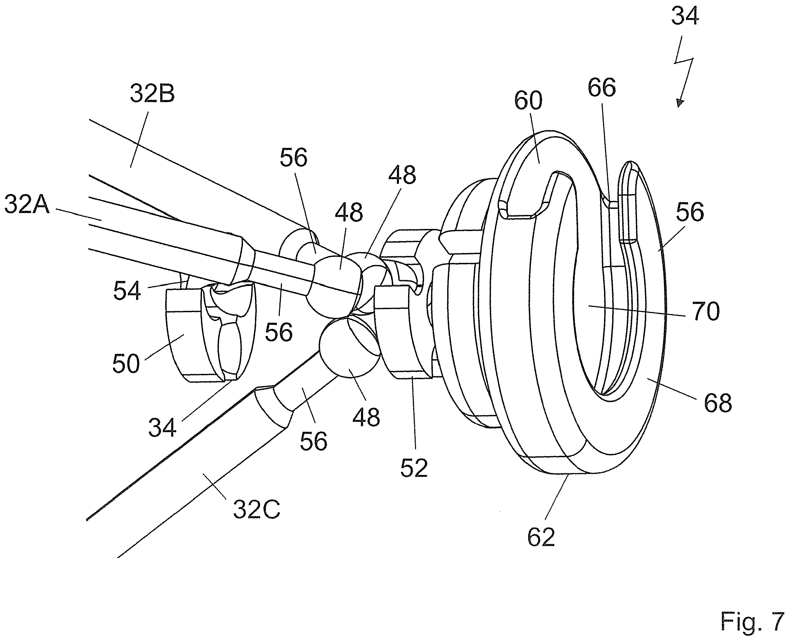

An ihren dem Basisträger 26 abgewandten Enden weisen die Haltearme 32A, 32B und 32C jeweils einen Kugelkopf 48 auf, der zwischen zwei Lagerschalen 50 und 52 aufgenommen ist, die Bestandteil der Multifunktionsaufnahme 34 sind (Figur 7). Die Lagerschalen 50 und 52 haben an ihrem Umfang jeweils Schlitze 54, die von verjüngten Abschnitten 56 der Haltearme 32A, 32B und 32C durchgriffen sind. Die Schlitze 54 definieren also die Schwenkebenen der Haltearme 32A, 32B und 32C bezüglich der Lagerschalen 50 und 52.

Die miteinander verbundenen Lagerschalen 50 und 52 sind an eine Rückseite eines Universalhalters 58 der Multifunktionsaufnahme 34 angebunden, die gegenüber den Lagerschalen 50 und 52 drehbar ist und eine Grundplatte 60 aufweist, auf der ein Ringabschnitt 62 angeordnet ist, der zum Einführen einer Koppelscheibe 64 der Halteeinrichtung 36 eine Aussparung 66 aufweist. An der der kreisrunden Grundplatte 60 abgewandten Seite ist der Ringabschnitt 62 mit einem radial nach innen weisenden, im Bereich der Aussparung 66 unterbrochenen Ringbund 68 versehen. Durch diese Ausbildung des Universalhalters 58 ist eine Aufnahmetasche 70 der Multifunktionsaufnahme 34 ausgebildet.

Die Halteeinrichtung 36 für das Accessoire 24 umfasst eine Trägerspinne mit drei Armen 72, 74, 76 die jeweils an die Koppelscheibe 64 angebunden sind. Der Arm 72 hat an seinem Ende ein als U-förmige Lasche ausgebildetes Greifelement 78, das einen Rand des Accessoires 24 übergreift. Die beiden Arme 74 und 76 haben an ihren Enden jeweils ein taschenartiges Greifelement 80 mit dreieckigem Grundriss, das eine Ecke des Accessoires 24 übergreift.

Das Halten der Trägereinrichtung 22 der jeweils eingestellten Position wird durch die reibungserhöhenden Druckplatten 38 und durch eine gezielte Schwergängigkeit der Kugelköpfe 48 in den zugeordneten Aufnahmen der Lagerschalen 50 und 52 und gegebenenfalls der durch die Lagerzapfen 47 gebildeten Gelenke erreicht.

### Bezugszeichenliste

- 10: Kraftfahrzeug
- 12: Fahrzeuginnenraum
- 14: Vordersitze
- 16: Rückbank
- 18: Rückenlehne
- 20: Rückseite
- 22: Trägereinrichtung
- 24: Accessoire
- 26: Basisträger
- 28A, B, C: Führungsbahn
- 30A, B, C: Gleiter
- 32A, B, C: Haltearme
- 34: Multifunktionsaufnahme
- 36: Halteeinrichtung
- 38: Druckplatte
- 40: Aussparung
- 42: äußerer Ringbund
- 44: innerer Ringbund
- 46: Riegelplatte
- 47: Lagerzapfen
- 48: Kugelkopf
- 50: Lagerschale
- 52: Lagerschale
- 54: Schlitz
- 56: verjüngter Abschnitt
- 58: Universalhalter
- 60: Grundplatte
- 62: Ringabschnitt
- 64: Koppelscheibe
- 66: Aussparung
- 68: Ringbund
- 70: Aufnahmetasche
- 72: Arm
- 74: Arm
- 76: Arm
- 78: Greifelement
- 80: Greifelement

## Patentansprüche

1. Trägereinrichtung zur Anordnung in einem land-, wasser- oder luftgebundenen Fahrzeug, umfassend einen Basisträger (26) zur Fixierung an einem Fahrzeugteil, eine Multifunktionsaufnahme (34), und eine Halteeinrichtung (36) für ein Funktionselement, wobei mindestens zwei Haltearme (32A, 32B, 32C) vorgesehen sind, die jeweils an einem Gleiter (30A, 30B, 30C) schwenkbar gelagert sind, der in einer jeweiligen Führungsbahn (28A, 28B, 28C) des Basisträgers (26) geführt ist,
**dadurch gekennzeichnet, dass**
die mindestens zwei Haltearme (32A, 32B, 32C) jeweils an ihren dem Basisträger (26) abgewandten Enden über ein Kugelgelenk mit der Multifunktionsaufnahme (34) verbunden sind, und dass die Halteeinrichtung (36) für das Funktionselement werkzeugfrei lösbar in der Multifunktionsaufnahme (34) fixierbar ist und ein Kopplungselement aufweist, das eine Koppelscheibe (64) umfasst, die in eine Aufnahmetasche (70) der Multifunktionsaufnahme (34) eingreift.

2. Trägereinrichtung nach Anspruch 1, **dadurch gekennzeichnet, dass** die Aufnahmetasche (70) von einer Grundplatte (60) und einem auf der Grundplatte (60) angeordneten Ringabschnitt (62) gebildet ist, der zum Einführen oder Ausführen der Koppelscheibe (64) eine Aussparung (66) aufweist und mit einem der Grundplatte (60) gegenüberliegenden, radial nach innen weisenden unterbrochenen Ringbund (68) versehen ist.

3. Trägereinrichtung nach Anspruch 1, **dadurch gekennzeichnet, dass** die Multifunktionsaufnahme (34) gegenüber dem Basisträger (26) in drei Raumrichtungen verschwenkbar ist.

4. Trägereinrichtung nach einem der Ansprüche 1 bis 3, **dadurch gekennzeichnet, dass** die mindestens zwei Haltearme (32A, 32B, 32C) über ein ein- oder mehrachsiges Gelenk oder über ein Kugelgelenk an dem Basisträger (26) angelenkt sind.

5. Trägereinrichtung nach einem der Ansprüche 1 bis 4, **dadurch gekennzeichnet, dass** der Basisträger (26) mindestens zwei Führungsbahnen (28A, 28B, 28C) für die mindestens zwei Gleiter (30A, 30B, 30C) aufweist, an denen die mindestens zwei Haltearme (32A, 32B, 32C) angelenkt sind.

6. Trägereinrichtung nach einem der Ansprüche 1 bis 5, **dadurch gekennzeichnet, dass** drei Haltearme (32A, 32B, 32C) vorgesehen sind.

7. Trägereinrichtung nach Anspruch 5 oder 6, **dadurch gekennzeichnet, dass** die mindestens zwei Gleiter (30A, 30B, 30C) jeweils an einer Druckplatte (38) anliegen, die den jeweiligen Gleiter (30A, 30B, 30C) in der Führungsbahn (28A, 28B, 28C) in Position hält.

8. Trägereinrichtung nach einem der Ansprüche 1 bis 7, **dadurch gekennzeichnet, dass** die Führungsbahnen (28A, 28B, 28C) bezogen auf einen Zentralabschnitt des Basisträgers (26) radial ausgebildet sind.

9. Trägereinrichtung nach einem der Ansprüche 1 bis 8, **dadurch gekennzeichnet, dass** die mindestens zwei Haltearme teleskopierbar sind.

10. Trägereinrichtung nach einem der Ansprüche 1 bis 9, **dadurch gekennzeichnet, dass** die Halteeinrichtung (36) eine Trägerspinne zur Fixierung eines plattenartig ausgebildeten Funktionselements umfasst.

11. Trägereinrichtung nach Anspruch 10, **dadurch gekennzeichnet, dass** die Trägerspinne mindestens drei Arme (72, 74, 76) umfasst, die vorzugsweise jeweils ein Greifelement (78, 80) zum Übergreifen eines Randes und/oder einer Ecke des Funktionselements haben.

12. Trägereinrichtung nach Anspruch 11, **dadurch gekennzeichnet, dass** zumindest einer der Arme teleskopierbar ausgebildet ist.

13. Trägereinrichtung nach einem der Ansprüche 1 bis 12, **dadurch gekennzeichnet, dass** die Halteeinrichtung (36) tisch- oder tablettartig ausgebildet ist.

14. Trägereinrichtung nach einem der Ansprüche 1 bis 13, **dadurch gekennzeichnet, dass** die Halteeinrichtung (36) eine Leuchte umfasst.

15. Trägereinrichtung nach einem der Ansprüche 1 bis 14, **dadurch gekennzeichnet, dass** die Halteeinrichtung (36) eine elektrische Schnittstelle für eine Datenverarbeitungseinrichtung umfasst.

16. Land-, wasser- oder luftgebundenes Fahrzeug, umfassend eine Trägereinrichtung (22) nach einem der Ansprüche 1 bis 15.

## Claims

1. A carrier device for being disposed in a land-, water- or air-bound vehicle, comprising a base carrier (26) for being attached to a vehicle part, a multifunction receiver (34) and a supporting device (36) for a functional element, wherein
at least two supporting arms (32A, 32B, 32C) are provided, each support arm (32A, 32B, 32C) being pivotably attached to a slider (30A, 30B, 30C), which is guided in a respective guide track (28A, 28B, 28C) of the base carrier (26), **characterized in that**
the at least two supporting arms (32A, 32B, 32C) are each connected to the multifunction receiver (34) via a ball joint at their respective ends facing away from the base support (26), and that
the supporting device (36) for the functional element is attachable to the multifunction receiver (34) so as to be removable without tools and comprises a coupling element comprising a coupling disk (64) which engages in a receiving pocket (70) of the multifunction receiver (34).

2. The carrier device according to claim 1, **characterized in that** the receiving pocket (70) is formed by a base plate (60) and a ring section (62), which is disposed on said base plate (60) and comprises a recess (66) for inserting or removing the coupling disc (64) and comprises a radially inwardly facing discontinuous ring collar (68) opposite to the base plate (60).

3. The carrier device according to claim 1, **characterized in that** the multifunction receiver (34) is pivotable in three spatial directions relative to the base carrier (26).

4. The carrier device according to one of the claims 1 to 3, **characterized in that** the at least two supporting arms (32A, 32B, 32C) are jointed to the base carrier (26) via a single- or multi-axis joint or via a ball joint.

5. The carrier device according to one of the claims 1 to 4, **characterized in that** the base carrier (26) comprises at least two guide tracks (28A, 28B, 28C) for the at least two sliders (30A, 30B, 30C), said guide tracks (28A, 28B, 28C) being connected to at least two supporting arms (32A, 32B, 32C).

6. The carrier device according to one of the claims 1 to 5, **characterized in that** three supporting arms (32A, 32B, 32C) are provided.

7. The carrier device according to claim 5 or 6, **characterized in that** the at least two sliders (30A, 30B, 30C) each abut a pressure plate (38) holding the respective slider (30A, 30B, 30C) in its position in the guide track (28A, 28B, 28C).

8. The carrier device according to one of the claims 1 to 7, **characterized in that** the guide tracks (28A, 28B, 28C) are oriented radially with respect to a central section of the base carrier (26).

9. The carrier device according to one of the claims 1 to 8, **characterized in that** the at least two supporting arms are telescopable.

10. The carrier device according to one of the claims 1 to 9, **characterized in that** the holding device (36) comprises a spider-shaped carrier for attaching a plate-shaped functional element in its position.

11. The carrier device according to claim 10, **characterized in that** the spider-shaped carrier comprises at least three arms (72, 74, 76), each preferably having a gripping element (78, 80) for engaging over an edge and/or corner of the functional element.

12. The carrier device according to claim 11, **characterized in that** at least one of the arms is telescopic.

13. The carrier device according to one of the claims 1 to 12, **characterized in that** the supporting device (36) is designed like a table or tray.

14. The carrier device according to one of the claims 1 to 13, **characterized in that** the supporting device (36) comprises a lamp.

15. The carrier device according to one of the claims 1 to 14, **characterized in that** the supporting device (36) comprises an electrical interface for a data processing device.

16. A land-, water- or air-bound vehicle, comprising a carrier device (22) according to one of the claims 1 to 15.

## Revendications

1. Dispositif porteur pour être disposé dans un véhicule terrestre, marin ou aéronautique, comprenant un support de base (26) disposé à être attaché à une partie de véhicule, un récepteur multifonction (34), et un dispositif de support (36) pour un élément fonctionnel, au moins deux bras de support (32A, 32B, 32C) étant prévus, chaque lesdits bras de support (32A, 32B, 32C) étant attachés de manière pivotable à un glisseur (30A, 30B, 30C) qui est guidé dans un chemin de guidage (28A, 28B, 28C) respective du support de base (26),
**caractérisé en ce que**
les au moins deux bras de support (32A, 32B, 32C) sont chacun connectés au récepteur multifonction (34) au moyen d'un joint sphérique à leurs extrémités respectives opposées le support de base (26), et que
le dispositif de support (36) pour l'élément fonctionnel est attachable au récepteur multifonction (34) de manière détachable sans outils et comprend un élément de couplage comprenant un disque de couplage (64) qui s'engage dans une poche de réception (70) du récepteur multifonction (34).

2. Dispositif porteur selon la revendication 1, **caractérisé en ce que** la poche de réception (70) est formée par une plaque de base (60) et une zone de bague (62) arrangée sur ladite plaque de base (60), ladite zone de bague (62) comprenant un évidement (66) pour insérer ou enlever le disque de couplage (64) et étant pourvue d'un collet de bague (68) orienté radialement vers l'intérieur opposé la plaque de base (60).

3. Dispositif porteur selon la revendication 1, **caractérisé en ce que** le récepteur multifonction (34) est pivotable en trois sens spatiaux en relation du support de base (26).

4. Dispositif porteur selon l'une quelconque des revendications 1 à 3, **caractérisé en ce que** les au moins deux bras de support (32A, 32B, 32C) sont articulés au support de base (26) par une articulation avec un axe ou plusieurs axes ou par un joint sphérique.

5. Dispositif porteur selon l'une quelconque des revendications 1 à 4, **caractérisé en ce que** le support de base (26) comprend au moins deux chemins de guidage (28A, 28B, 28C) pour les au moins deux glisseurs (30A, 30B, 30C), au moins deux bras de support (32A, 32B, 32C) étant articulés auxdits chemins de guidage (28A, 28B, 28C).

6. Dispositif porteur selon l'une quelconque des revendications 1 à 5, **caractérisé en ce que** trois bras de support (32A, 32B, 32C) sont prévus.

7. Dispositif porteur selon la revendication 5 ou 6, **caractérisé en ce que** les au moins deux glisseurs (30A, 30B, 30C) chacun appuient contre une plaque de pression qui retient le glisseur (30A, 30B, 30C) respectif en position dans le chemin de guidage (28A, 28B, 28C).

8. Dispositif porteur selon l'une quelconque des revendications 1 à 7, **caractérisé en ce que** les chemins de guidage (28A, 28B, 28C) sont orientées radialement en relation d'une partie centrale du support de base (26).

9. Dispositif porteur selon l'une quelconque des revendications 1 à 8, **caractérisé en ce que** les au moins deux bras de support sont réalisés en forme télescopique.

10. Dispositif porteur selon l'une quelconque des revendications 1 à 9, **caractérisé en ce que** le dispositif de support (36) comprend une araignée porteuse pour attacher un élément fonctionnel en forme de plaque.

11. Dispositif porteur selon la revendication 10, **caractérisé en ce que** l'araignée porteuse comprend au moins trois bras (72, 74, 76), qui chacun comprennent préférablement un élément de préhension (78, 80) pour engager par-dessus un bord et/ou un coin de l'élément fonctionnel.

12. Dispositif porteur selon la revendication 11, **caractérisé en ce qu'**au moins un des bras est réalisé en forme télescopique.

13. Dispositif porteur selon l'une quelconque des revendications 1 à 12, **caractérisé en ce que** le dispositif de support (36) est réalisé en forme d'un table ou d'un plateau.

14. Dispositif porteur selon l'une quelconque des revendications 1 à 13, **caractérisé en ce que** le dispositif de support (36) comprend une lampe.

15. Dispositif porteur selon l'une quelconque des revendications 1 à 14, **caractérisé en ce que** le dispositif de support (36) comprend une interface électrique pour un dispositif de traitement de données.

16. Véhicule terrestre, marin ou aéronautique, comprenant un dispositif porteur selon (22) l'une quelconque des revendications 1 à 15.
